# FASCICULE DE BREVET EUROPEEN

(11) **EP 1 502 787 B1**
(45) Date de publication et mention de la délivrance du brevet: **18.04.2007**
(21) Numéro de dépôt: 04291808.6
(22) Date de dépôt: 15.07.2004
(51) Int. Cl.: B60H 1/34

(54) **Aérateur de véhicule comportant un diffuseur de parfum**
Luftauslassvorrichtung für ein Fahrzeug mit Duftspender
Air outlet for vehicle with fragrance dispenser

(30) Priorité: 31.07.2003 FR 0309446
(43) Date de publication de la demande: 02.02.2005
(73) Titulaire: Key Plastics International, 61130 Belleme (FR)
(72) Inventeur: Davril, Jean-Louis, 61400 Mortagne Au Perche (FR); Deplace, Bruno, 61130 Vaunoise (FR)
(74) Mandataire: Lemoine, Robert

(56) Documents cités:
- WO-A-02/066274
- WO-A-02/085652
- DE-U1- 20 212 778
- FR-A- 2 821 022
- FR-A- 2 848 915
- PATENT ABSTRACTS OF JAPAN vol. 013, no. 013 (M-783), 12 janvier 1989 (1989-01-12) -& JP 63 222919 A (MATSUSHITA ELECTRIC WORKS LTD), 16 septembre 1988 (1988-09-16)

## Description

La présente invention concerne un aérateur, comme décrit dans la revendication 1, pour introduire de l'air dans l'habitacle d'un véhicule, notamment d'une automobile, comprenant un corps creux pourvu d'un orifice d'entrée relié à une source d'air et d'un orifice de sortie débouchant dans l'habitacle, ainsi qu'un diffuseur de parfum intégré au corps creux et comportant une source de parfum.

Certaines personnes incommodées par les odeurs régnant parfois dans les habitacles des véhicules installent un diffuseur de parfum au voisinage immédiat de l'un des aérateurs de ces derniers.

Ces diffuseurs sont toutefois difficiles à installer car l'aménagement intérieur des véhicules actuels n'est pas conçu pour les recevoir.

Ils sont en outre relativement peu efficaces du fait qu'ils peuvent rarement être disposés sur la trajectoire de l'air sortant des aérateurs.

WO 02/066274 décrit un aérateur selon le préambule de la revendication 1.

FR-A-2 821 022 décrit un aérateur permettant de parfumer l'air introduit dans l'habitacle d'un véhicule, cet aérateur comprenant un corps creux délimitant un conduit dans lequel l'air circule pour se rendre dans l'habitacle, et un diffuseur de parfum intégré communiquant avec le conduit par l'intermédiaire d'ouvertures ménagées dans la paroi du corps creux.

L'air circulant dans le conduit ne peut toutefois pas venir au contact de la source de parfum située à l'intérieur du diffuseur de parfum du fait que sa direction d'écoulement est parallèle à la sortie des ouvertures reliant le conduit au diffuseur de parfum.

La quantité de parfum diffusée est toutefois très faible, ce qui ne permet pas de parfumer de façon rapide et efficace l'habitacle du véhicule.

PATENT ABSTRACTS OF JAPAN vol. 013, n° 013 (M-783) et JP 63 222919 A décrivent un diffuseur de parfum comportant un boîtier dans lequel une plaquette aromatique est insérable et qui est destiné à être introduit dans un évidemment ménagé dans la face antérieure d'un aérateur d'automobile.

Ce diffuseur de parfum a toutefois l'inconvénient, une fois en place dans l'aérateur, de réduire la section de passage de l'écoulement d'air vers l'habitacle de l'automobile, et par conséquent la qualité de l'aération à l'intérieur de l'habitacle.

La présente invention se propose de remédier aux inconvénients des aérateurs décrits dans les documents susvisés et, pour ce faire, elle a pour objet un aérateur ayant la structure indiquée au premier paragraphe ci-dessus et caractérisé en ce que le diffuseur de parfum comporte une dérivation dans laquelle est disposée la source de parfum, cette dérivation étant située à l'intérieur du corps creux et destinée à être empruntée par au moins une partie de l'air circulant de l'orifice d'entrée à l'orifice de sortie.

Comme le diffuseur de parfum est intégré au corps creux de l'aérateur, l'utilisateur du véhicule n'a plus à faire preuve d'ingéniosité pour installer un diffuseur indépendant dans ce dernier.

En outre, grâce à sa dérivation qui n'a pas d'équivalent dans les diffuseurs de l'état antérieur de la technique, le diffuseur selon l'invention permet au parfum de se mélanger intimement avec l'air introduit dans l'habitacle et de se répartir rapidement et uniformément dans ce dernier.

Selon un mode de réalisation préféré de l'invention, le diffuseur de parfum comprend un corps comportant un conduit qui constitue la dérivation et un logement qui communique avec le conduit et est conformé pour recevoir une cartouche de parfum, un élément de réglage déplaçable par rapport au corps entre une première position extrême dans laquelle il permet au logement de communiquer librement avec le conduit et une deuxième position extrême dans laquelle il isole totalement le logement du conduit, et des moyens de commande pour déplacer l'élément de réglage entre ses positions extrêmes et contrôler ainsi la diffusion du parfum dans l'air introduit dans l'habitacle.

Ce diffuseur a une structure à la fois compacte et simple et sa présence dans l'aérateur ne modifie pratiquement pas le prix de revient de ce dernier.

Avantageusement, l'élément de réglage comprend un obturateur déplaçable dans le logement entre une position extrême active dans laquelle il obture complètement le conduit et une position extrême inactive dans laquelle il est en totalité hors du conduit.

Grâce à cet obturateur, l'émission de parfum dans l'habitacle du véhicule peut donc être contrôlée très facilement par le conducteur ou toute autre personne accompagnant celui-ci.

De préférence, le logement comprend deux parties situées de part et d'autre du conduit.

L'obturateur peut dans ce cas être reçu dans l'une des deux parties du logement et se présenter sous la forme d'un étui comportant un fond à son extrémité la plus éloignée du conduit.

Par ailleurs, le dispositif de réglage est de préférence déplaçable en translation sur le corps, ce mode de déplacement nécessitant des moyens simples et faciles à mettre en place.

Selon une caractéristique particulière de l'invention, des moyens d'immobilisation sont prévus pour retenir l'élément de réglage dans ses deux positions extrêmes.

Le conducteur ou un passager du véhicule peut donc ainsi immobiliser le dispositif de réglage dans l'une ou l'autre de ses positions extrêmes lorsqu'il souhaite que la quantité de parfum diffusée dans l'habitacle du véhicule soit maximale ou au contraire nulle.

Selon un mode de réalisation préféré, les moyens d'immobilisation comprennent des organes complémentaires situés respectivement sur le corps et sur l'élément de réglage, ces organes étant constitués respectivement par une lame élastique comportant une dépression transversale et par deux saillies espacées, la dépression et l'une des saillies coopérant entre elles lorsque l'élément de réglage est dans la position extrême correspondante.

Grâce à ces moyens d'immobilisation, la quantité de parfum diffusée peut être modifiée de façon continue lorsque l'élément de réglage est déplacé de l'une à l'autre de ses positions extrêmes.

Selon une autre caractéristique particulière de l'invention, les moyens de commande comprennent une molette d'actionnement adjacente à l'orifice de sortie, cette molette étant montée rotative sur le corps creux et reliée à l'élément de réglage par une articulation autorisant un déplacement en translation de celui-ci.

Ces moyens de commande ont l'avantage d'être simples et faciles à actionner.

Dans le mode de réalisation présenté ci-dessus, la cartouche de parfum est retenue au moins partiellement dans le logement du diffuseur et comporte une partie évidée au niveau du conduit.

Etant donné que la partie évidée de la cartouche de parfum est située au niveau du conduit, le parfum peut être facilement entraîné par l'air circulant dans le conduit.

Par ailleurs, le corps creux de l'aérateur a de préférence une section transversale rectangulaire, tandis que le diffuseur de parfum est de préférence adjacent à l'un des côtés transversaux du corps creux.

Un mode d'exécution de la présente invention sera décrit ci-après à titre d'exemple nullement limitatif en référence aux dessins annexés dans lesquels :

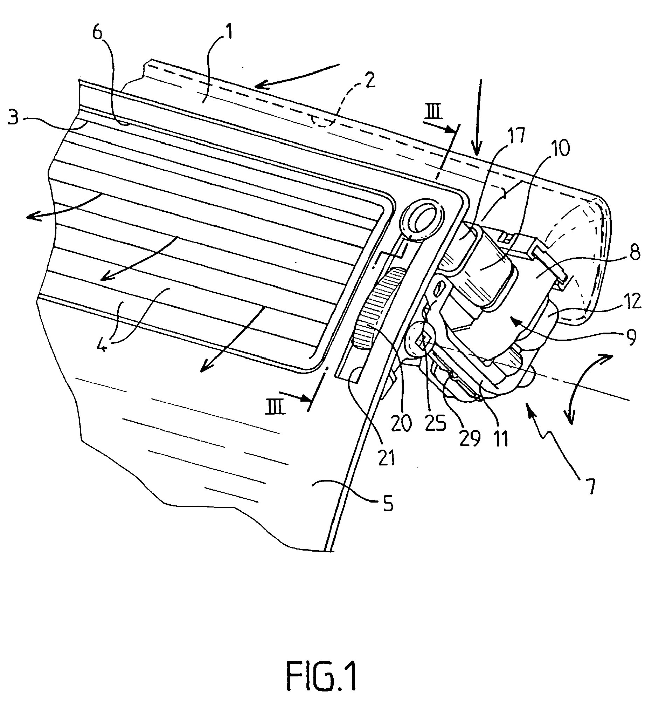

- la figure 1 est une vue en perspective schématique et partielle d'un aérateur conforme à l'invention ;
- la figure 2 est une vue éclatée de l'aérateur visible sur la figure 1, les déflecteurs situés au niveau de l'orifice de sortie n'étant pas représentés ;
- la figure 3 est une vue en coupe schématique selon la ligne III-III de la figure 1, l'élément de réglage du diffuseur de parfum étant représenté dans sa position extrême dans laquelle il empêche la diffusion du parfum ; et
- la figure 4 est une vue analogue à la figure 3 mais montre l'élément de réglage dans son autre position extrême dans laquelle il permet une diffusion libre du parfum.

L'aérateur représenté sur les dessins a été conçu pour introduire de l'air parfumé dans l'habitacle d'un véhicule, notamment d'une automobile.

Il va de soi cependant que l'on ne sortirait pas du cadre de la présente invention si cet aérateur était utilisé pour introduire de l'air parfumé dans d'autres moyens de transport, par exemple dans un wagon ou un avion, ainsi que dans des immeubles d'habitation ou de bureaux pourvus d'un système de conditionnement d'air.

L'aérateur visible sur les dessins comprend tout d'abord un corps creux 1 pourvu à l'une de ses extrémités d'un orifice d'entrée 2 relié d'une manière connue en soi à la source d'air conditionné du véhicule et à son autre extrémité d'un orifice de sortie 3 débouchant dans l'habitacle.

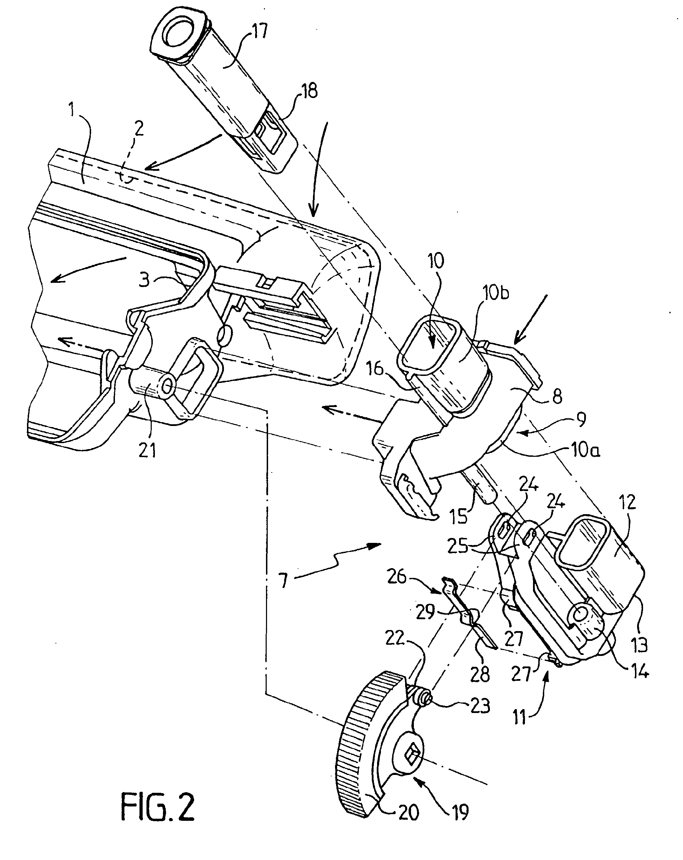

Le corps creux 1 comporte des déflecteurs 4 destinés à modifier l'orientation du flux d'air émis dans l'habitacle, ces déflecteurs, non représentés sur la figure 2, étant montés pivotants dans le corps 1 et ayant l'un de leurs côtés longitudinaux pratiquement au niveau de l'orifice de sortie 3.

Une plaque 5 fixée sur le tableau de bord du véhicule est pourvue d'un trou 6 dans le lequel s'étend l'extrémité du corps 1 comportant l'orifice de sortie 3 et sert de cache aux autres parties du corps 1.

L'aérateur comprend également un diffuseur de parfum 7 intégré au corps 1 et pourvu d'une dérivation 8 destinée à être empruntée par une partie de l'air circulant de l'orifice d'entrée 2 à l'orifice de sortie 3.

Le diffuseur de parfum 7, qui est particulièrement bien visible sur la figure 2, comprend un corps 9 comportant un conduit constitué par la dérivation 8 et un logement 10 comprenant deux parties 10a, 10b situées de part et d'autre du conduit 8, ces deux parties étant dans le prolongement l'une de l'autre et communiquant avec le conduit 8 au niveau de leurs extrémités qui sont les plus proches.

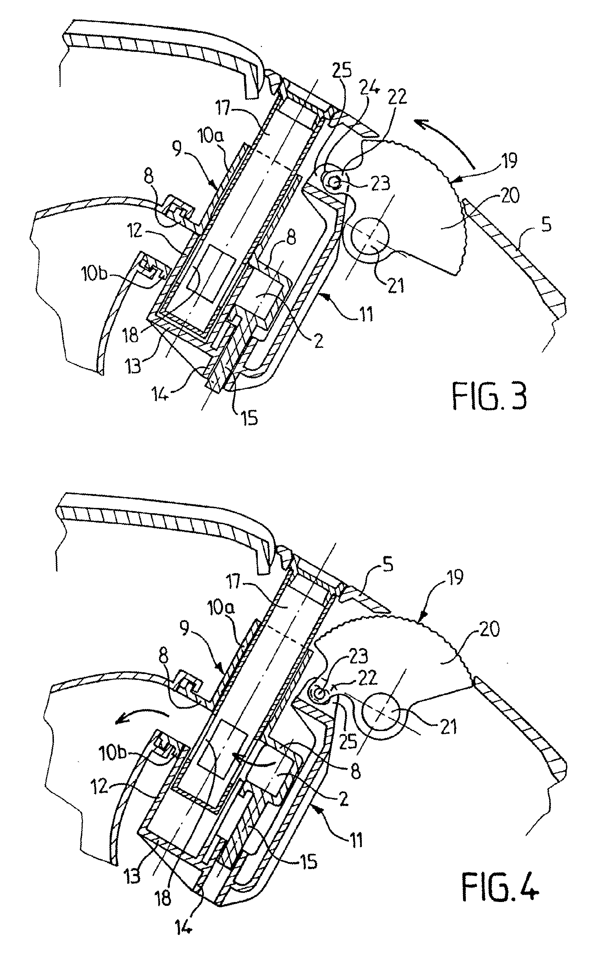

Le diffuseur de parfum comprend également un élément de réglage 11 déplaçable par rapport au corps 9 entre une première position extrême visible sur la figure 4 dans laquelle il permet au logement 10 de communiquer librement avec le conduit 8 et une deuxième position extrême visible sur la figure 3 dans laquelle il isole totalement le logement 10 du conduit 8.

L'élément de réglage 11 comprend un obturateur 12 s'avançant dans la partie 10a du logement 10, du côté opposé à la partie 10b de celui-ci, et déplaçable en translation dans celui-ci entre une position extrême active visible sur la figure 3 et dans laquelle il obture complètement le conduit 8 et une position extrême inactive visible sur la figure 4 et dans laquelle il est en totalité hors du conduit 8.

Comme on peut le voir sur les figures 3 et 4, l'obturateur 12 se présente sous la forme d'un étui comportant un fond 13 à son extrémité la plus éloignée du conduit.

L'élément de réglage 11 comprend également un manchon 14 s'étendant parallèlement à l'obturateur 12. Le manchon 14 est enfilé sur une tige 15 prévue sur le corps 9 et s'étendant parallèlement au logement 10

Grâce à cette tige, l'élément de réglage 11 peut être déplacé en translation par rapport au corps 9 tout en restant parallèle au logement 10.

On notera ici que pour éviter que l'élément de réglage 11 puisse tourner sur le corps 9, celui-ci comporte une nervure longitudinale 16 s'étendant parallèlement au logement 10 et reçue dans une rainure de forme correspondante ménagée dans l'élément de réglage, cette rainure n'étant pas visible sur les dessins

Le logement 10 du corps 9 est prévu pour recevoir une cartouche de parfum 17 à l'intérieur de laquelle est disposé un support non représenté portant le parfum et à partir duquel celui-ci peut être diffusé de manière contrôlée.

La cartouche 17 comporte une partie évidée 18 au voisinage de son extrémité inférieure, la partie évidée 18 se trouvant au niveau du conduit 8 lorsque la cartouche 17 est en place dans le logement 10, comme cela ressort des figures 3 et 4.

Lorsque l'obturateur 12 est dans sa position extrême active représentée sur la figure 3, il constitue une barrière entre la cartouche 17 et le conduit 8 et s'oppose à une diffusion de parfum en empêchant l'air de circuler dans ce dernier.

En revanche, lorsqu'il est dans sa position extrême inactive représentée sur la figure 4, il ne se trouve pas à l'intérieur du conduit 8 de sorte que de l'air peut circuler dans celui-ci et entraîner avec lui le parfum diffusé par la cartouche.

Grâce au fond 13 de l'obturateur 12, les fuites d'air au niveau de l'extrémité inférieure de la partie 10a du logement 10 sont bien entendu évitées.

Le diffuseur de parfum comprend par ailleurs des moyens de commande 19 à l'aide desquels l'élément de réglage 11 peut être déplacé entre ses positions extrêmes afin de contrôler la diffusion du parfum dans l'air introduit dans l'habitacle du véhicule.

Dans le mode de réalisation représenté, les moyens de commande 19 comprennent une molette d'actionnement 20 faisant légèrement saillie dans un orifice 21 ménagé dans la plaque 5 et ayant des dimensions appropriées.

La molette 20 est montée rotative sur un axe cylindrique 21 (visible sur la figure 2) du corps creux 1 et comporte une protubérance 22 portant deux tétons coaxiaux 23 sur ses faces, ces tétons étant reçus dans des trous oblongs 24 ménagés dans les ailes 25 d'une chape prévue sur l'élément de réglage 11.

On conçoit aisément que grâce à ce montage particulier, il suffit de faire tourner manuellement la molette 20 dans un sens ou dans l'autre pour amener l'obturateur dans l'une ou l'autre de ses positions extrêmes.

L'aérateur qui vient d'être décrit comprend par ailleurs des moyens 26 pour immobiliser l'élément de réglage 11 dans ses deux positions extrêmes.

Dans le mode de réalisation représenté, les moyens d'immobilisation 26 comprennent deux saillies 27 prévues sur l'élément de réglage 11 et séparées l'une de l'autre par une distance égale à celle que doit parcourir ce dernier pour passer de l'une à l'autre de ses deux positions extrêmes.

Ils comprennent également une lame élastique 28 fixée sur le corps 9 du diffuseur de parfum et comportant dans sa partie médiane une dépression transversale 29 destinée à venir coopérer avec les saillies 27 lorsque l'élément de réglage 11 est amené dans ses positions extrêmes.

Etant donné que la dépression 29 a une forme complémentaire de celle des saillies 27, l'élément de réglage 11 peut être immobilisé relativement fermement dans ses positions extrêmes de sorte qu'il est nécessaire d'exercer un certain effort sur la molette 20 pour l'éloigner de ses positions extrêmes.

La résistance, opposée est voulue afin d'éviter que l'élément de réglage se déplace de façon intempestive, par exemple sous l'effet de vibrations.

Bien entendu, l'élément de réglage peut être immobilisé dans une position intermédiaire quelconque entre ses positions extrêmes par suite d'une rotation prédéterminée de la molette 20, ce qui permet d'ajuster la quantité de parfum diffusée dans le réceptacle du véhicule.

Dans le mode de réalisation décrit ci-dessus, les deux saillies 27 sont prévues sur l'élément de réglage 11 tandis que la lame élastique 28 est fixée sur le corps 9.

Il va de soi que les deux saillies 27 pourraient être portées par le corps 9 et la lame élastique 28 par l'élément de réglage 11.

Pour être complet, on indiquera que les orifices d'entrée 2 et de sortie 3 du corps creux 1 de l'aérateur représenté sur les dessins ont une forme globalement rectangulaire, mais rien ne s'oppose à ce qu'ils aient une toute autre forme.

Par ailleurs, le diffuseur de parfum 7 est adjacent à l'un des côtés transversaux du corps creux, mais il pourrait être prévu en un tout autre endroit sur le corps creux 1.

Enfin, on notera que la cartouche de parfum 17 est de conception classique. Elle peut être mise en place très facilement puisque la plaque 5 comporte un orifice permettant son introduction directe dans le logement 10 du corps 9 du diffuseur de parfum 7.

Il ressort de ce qui précède que l'aérateur et le diffuseur de parfum qui viennent d'être décrits constituent un élément unique grâce auquel le conducteur ou un passager d'un véhicule peut commander très facilement la diffusion d'un parfum dans l'habitacle puisque ce parfum, lorsque sa diffusion est souhaitée, est introduit directement dans l'air sortant de l'aérateur.

## Revendications

1. Aérateur pour introduire de l'air dans l'habitacle d'un véhicule, notamment d'une automobile, comprenant un corps creux (1) pourvu d'un orifice d'entrée (2) relié à une source d'air et d'un orifice de sortie (3) débouchant dans l'habitacle, ainsi qu'un diffuseur de parfum (7) intégré au corps creux (1) et comprenant un corps (9) comportant un conduit de dérivation (8) situé à l'extérieur du corps creux (1) et un logement (10) communiquant avec le conduit (8), le conduit (8) étant destiné à être emprunté par au moins une partie de l'air circulant de l'orifice d'entrée (2) à l'orifice de sortie (3) et le logement (10) étant conformé pour recevoir une cartouche de parfum (17) et permettre de disposer celle-ci dans ledit conduit, **caractérisé en ce que** le diffuseur de parfum (7) comprend un élément de réglage (11) déplaçable en translation par rapport au corps (9) entre une première position extrême dans laquelle il permet au logement (10) de communiquer librement avec le conduit (8) et une deuxième position extrême dans laquelle il isole totalement le logement (10) du conduit (8), et des moyens de commande (19) pour déplacer l'élément de réglage (11) entre ses positions extrêmes et contrôler ainsi la diffusion du parfum dans l'air introduit dans l'habitacle.

2. Aérateur selon la revendication 1, **caractérisé en ce que** l'élément de réglage (11) comprend un obturateur (12) déplaçable dans le logement (10) entre une position extrême active dans laquelle il obture complètement le conduit (8) et une position extrême inactive dans laquelle il est en totalité hors du conduit (8).

3. Aérateur selon la revendication 2, **caractérisé en ce que** le logement (10) comprend deux parties (10a, 10b) situées de part et d'autre du conduit (8).

4. Aérateur selon la revendication 2 ou 3, **caractérisé en ce que** l'obturateur (12) est reçu dans l'une (10a) des deux parties du logement (10) et se présente sous la forme d'un étui comportant un fond (13) à son extrémité la plus éloignée du conduit (8).

5. Aérateur selon l'une quelconque des revendications 1 à 4, **caractérisé en ce que** le dispositif de réglage (11) est déplaçable en translation sur le corps (9).

6. Aérateur selon l'une quelconque des revendications 1 à 5, **caractérisé en ce que** des moyens d'immobilisation (26) sont prévus pour retenir l'élément de réglage (11) dans ses deux positions extrêmes.

7. Aérateur selon la revendication 6, **caractérisé en que** les moyens d'immobilisation (26) comprennent des organes complémentaires (27, 28) situés respectivement sur le corps (9) et sur l'élément de réglage (11), ces organes étant constitués respectivement par une lame élastique (28) comportant une dépression transversale (29) et par deux saillies espacées (27), la dépression (29) et l'une des saillies (27) coopérant entre elles lorsque l'élément de réglage (11) est dans la position extrême correspondante.

8. Aérateur selon l'une quelconque des revendications 5 à 7, **caractérisé en ce que** les moyens de commande (19) comprennent une molette d'actionnement (20) adjacente à l'orifice de sortie (3), cette molette étant montée rotative sur le corps creux (1) et reliée à l'élément de réglage(11) par une articulation (23, 24)autorisant un déplacement en translation de celui-ci.

9. Aérateur selon l'une quelconque des revendications 1 à 8. **caractérisé en ce que** la cartouche de parfum (17) est retenue au moins partiellement dans le logement (10) du diffuseur (7) et comporte une partie évidée (18) au niveau du conduit (8).

10. Aérateur selon l'une quelconque des revendications précédentes, **caractérisé en ce que** le corps creux (1) a une section transversale rectangulaire.

11. Aérateur selon la revendication 10, **caractérisé en ce que** le diffuseur de parfum (7) est adjacent à l'un des côtés transversaux du corps creux (1).

## Claims

1. Ventilator for blowing air into the passenger compartment of a vehicle, particularly a motor vehicle, comprising a hollow body (1) provided with an inlet orifice (2) connected to a source of air and with an outlet orifice (3) leading into the passenger compartment, and a perfume diffuser (7) incorporated into the hollow body (1) and comprising a body (9) having a bypass duct (8) situated on the outside of the hollow body (1) and a housing (10) communicating with the duct (8), the duct (8) being designed to be used by at least a portion of the air flowing from the inlet orifice (2) to the outlet orifice (3) and the housing (10) being shaped to receive a perfume cartridge (17) and make it possible to place the latter in said duct, **characterized in that** the perfume diffuser (7) comprises an adjustment element (11) that can be moved in translation relative to the body (9) between a first extreme position in which it allows the housing (10) to communicate freely with the duct (8) and a second extreme position in which it totally isolates the housing (10) from the duct (8), and control means (19) for moving the adjustment element (11) between its extreme positions and thus controlling the diffusion of the perfume in the air blown into the passenger compartment.

2. Ventilator according to Claim 1, **characterized in that** the adjustment element (11) comprises a shutter (12) that can be moved in the housing (10) between an extreme active position in which it completely shuts off the duct (8) and an extreme inactive position in which it is totally out of the duct (8).

3. Ventilator according to Claim 2, **characterized in that** the housing (10) comprises two portions (10a, 10b) situated on either side of the duct (8).

4. Ventilator according to Claim 2 or 3, **characterized in that** the shutter (12) is received in one (10a) of the two portions of the housing (10) and has the shape of a case comprising a bottom (13) at its end furthest from the duct (8).

5. Ventilator according to any one of Claims 1 to 4, **characterized in that** the adjustment device (11) can be moved in translation on the body (9).

6. Ventilator according to any one of Claims 1 to 5, **characterized in that** immobilization means (26) are provided to retain the adjustment element (11) in its two extreme positions.

7. Ventilator according to Claim 6, **characterized in that** the immobilization means (26) comprise complementary members (27, 28) situated respectively on the body (9) and on the adjustment element (11), said members consisting respectively of an elastic blade (28) comprising a transverse depression (29) and of two protrusions (27) spaced apart, the depression (29) and one of the protrusions (27) interacting with one another when the adjustment element (11) is in the corresponding extreme position.

8. Ventilator according to any one of Claims 5 to 7, **characterized in that** the control means (19) comprise an actuation thumbwheel (20) adjacent to the outlet orifice (3), said thumbwheel being mounted so as to rotate on the hollow body (1) and connected to the adjustment element (11) by an articulation (23, 24) allowing the latter to be moved in translation.

9. Ventilator according to any one of Claims 1 to 8, **characterized in that** the perfume cartridge (17) is retained at least partially in the housing (10) of the diffuser (7) and comprises a hollowed portion (18) at the duct (8).

10. Ventilator according to any one of the preceding claims, **characterized in that** the hollow body (1) has a rectangular cross section.

11. Ventilator according to Claim 10, **characterized in that** the perfume diffuser (7) is adjacent to one of the transverse sides of the hollow body (1).

## Patentansprüche

1. Lüfter zum Einleiten von Luft in die Fahrgastzelle eines Fahrzeugs, im Besonderen eines Kraftfahrzeugs, umfassend einen Hohlkörper (1), der mit einer Eintrittsöffnung (2), die mit einer Luftquelle verbunden ist, und einer Austrittsöffnung (3), die in die Fahrgastzelle mündet, versehen ist, sowie einen Duftstoffdiffusor (7), der in den Hohlkörper (1) integriert ist und einen Körper (9) umfasst, der eine Abzweigrohrleitung (8), die sich an der Außenseite des Hohlkörpers (1) befindet, und eine Aufnahme (10), die mit der Rohrleitung (8) kommuniziert, umfasst, wobei die Rohrleitung (8) dazu bestimmt ist, von wenigstens einem Teil der Luft, die von der Eintrittsöffnung (2) zu der Austrittsöffnung (3) zirkuliert, verwendet zu werden, und die Aufnahme (10) dazu eingerichtet ist, eine Duftstoffpatrone (17) aufzunehmen und deren Anordnen in der Rohrleitung zu ermöglichen, **dadurch gekennzeichnet, dass** der Duftstoffdiffusor (7) umfasst: ein Regelelement (11), das per Translation in Bezug auf den Körper (9) zwischen einer ersten Endposition, in der es der Aufnahme freies Kommunizieren mit der Rohrleitung (8) ermöglicht, und einer zweiten Endposition, in der es die Aufnahme (10) vollständig von der Rohrleitung (8) trennt, bewegt werden kann, und Steuereinrichtungen (19), um das Regelelement (11) zwischen seinen Endpositionen zu bewegen und so die Diffusion des Duftsstoffs in die Luft, die in die Fahrgastzelle eingeleitet wird, zu ermöglichen.

2. Lüfter nach Anspruch 1, **dadurch gekennzeichnet, dass** das Regelelement (11) eine Verschlussvorrichtung (12) umfasst, die in der Aufnahme (10) zwischen einer aktiven Endposition, in der sie das Leitungsrohr (8) vollständig verschließt, und einer inaktiven Endposition, in der sie sich vollständig außerhalb der Rohrleitung (8) befindet, bewegt werden kann.

3. Lüfter nach Anspruch 2, **dadurch gekennzeichnet, dass** die Aufnahme (10) zwei Teile (10a, 10b) umfasst, die sich zu beiden Seiten der Rohrleitung (8) befinden.

4. Lüfter nach Anspruch 2 oder 3, **dadurch gekennzeichnet, dass** die Verschlussvorrichtung (12) in einen (10a) der zwei Teile der Aufnahme (10) aufgenommen wird und sich in der Form einer Hülse darstellt, die an ihrem am weitesten von der Rohrleitung (8) entfernten Ende einen Boden (13) umfasst.

5. Lüfter nach einem der Ansprüche 1 bis 4, **dadurch gekennzeichnet, dass** die Regelvorrichtung (11) per Translation an dem Körper (9) bewegt werden kann.

6. Lüfter nach einem der Ansprüche 1 bis 5, **dadurch gekennzeichnet, dass** Blockiereinrichtungen (26) vorgesehen sind, um das Regelelement (11) in seinen zwei Endpositionen zu halten.

7. Lüfter nach Anspruch 6, **dadurch gekennzeichnet, dass** die Blockiereinrichtungen (26) Zusatzeinrichtungen (27, 28) umfassen, die sich an dem Körper (9) bzw. an dem Regelelement (11) befinden, wobei diese Einrichtungen aus einem federnden Streifen (28), der eine Quervertiefung (29) umfasst, bzw. aus zwei beabstandeten Vorsprüngen (27) gebildet werden, wobei die Vertiefung (29) und einer der Vorsprünge (27) miteinander zusammenwirken, wenn sich das Regelelement (11) in der entsprechenden Endposition befindet.

8. Lüfter nach einem der Ansprüche 5 bis 7, **dadurch gekennzeichnet, dass** die Steuereinrichtungen (19) ein Betätigungs-Rändelrad (20), das an die Austrittsöffnung (3) angrenzt, umfassen, wobei dieses Rändelrad drehbar an dem Hohlkörper (1) montiert ist und durch ein Gelenk (23, 24) mit dem Regelelement (11) verbunden ist, wobei eine Translationsbewegung desselben ermöglicht wird.

9. Lüfter nach einem der Ansprüche 1 bis 8, **dadurch gekennzeichnet, dass** die Duftstoffpatrone (17) wenigstens teilweise in der Aufnahme (10) des Diffusors (7) gehalten wird und einen ausgesparten Teil (18) auf Höhe der Rohrleitung (8) umfasst.

10. Lüfter nach einem der vorhergehenden Ansprüche, **dadurch gekennzeichnet, dass** der Hohlkörper (1) einen rechteckigen Querschnitt aufweist.

11. Lüfter nach Anspruch 10, **dadurch gekennzeichnet, dass** der Duftstoffdiffusor (7) an eine der Querseiten des Hohlkörpers (1) angrenzt.
